(19) **Europäisches Patentamt / European Patent Office / Office européen des brevets**

(11) **EP 4 773 703 A1**

(12) **EUROPEAN PATENT APPLICATION**
published in accordance with Art. 153(4) EPC

(43) Date of publication:
08.07.2026 Bulletin 2026/28

(21) Application number: 24858454.2

(22) Date of filing: 23.08.2024

(51) International Patent Classification (IPC):
*H04W 72/23* (2023.01)     *H04W 72/04* (2023.01)

(52) Cooperative Patent Classification (CPC):
**H04L 5/14; H04W 72/04; H04W 72/0446;**
**H04W 72/23**

(86) International application number:
**PCT/CN2024/114093**

(87) International publication number:
**WO 2025/044913 (06.03.2025 Gazette 2025/10)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 29.08.2023 CN 202311101935

(71) Applicant: Spreadtrum Communications
(Shanghai) Co., Ltd.
Shanghai 201203 (CN)

(72) Inventors:
• ZHANG, Meng
Shanghai 201203 (CN)
• PAN, Zhengang
Shanghai 201203 (CN)
• XU, Zhikun
Shanghai 201203 (CN)
• ZHANG, Shuai
Shanghai 201203 (CN)

(74) Representative: **Ipsilon**
**12 Avenue d'Italie**
**75013 Paris (FR)**

(54) **COMMUNICATION METHOD AND APPARATUS, AND COMPUTER READABLE STORAGE MEDIUM**

(57)    The present application provides a communication method and apparatus, and a computer readable storage medium. The communication method comprises: receiving first configuration information, wherein the first configuration information indicates duplex types for time domain resource units, and the duplex types comprise full duplex; and on the basis of the first configuration information, performing uplink transmission, downlink transmission, and/or simultaneous uplink and downlink transmission. The present application provides a solution for indicating a duplex type on a time domain resource, so as to implement full duplex transmission on the entire discontinuous spectrum.

FIG. 1

## Description

The present application claims priority to CN Patent Application No. 202311101935.4, entitled "COMMUNICATION METHOD AND APPARATUS, AND COMPUTER READABLE STORAGE MEDIUM", and filed with the China National Intellectual Property Administration on August 29, 2023, the entirety of which is incorporated herein by reference.

## TECHNICAL FIELD

The present application relates to the field of communication technology, and particularly to a communication method and apparatus, and computer-readable storage medium.

## BACKGROUND

In the future Sixth Generation mobile communication system (e.g., 6th generation mobile networks, 6th generation wireless systems, or 6G), two features may emerge: one is the use of multiple non-contiguous bandwidths, and the other is the introduction of in-band full duplex technology.

The use of multiple non-contiguous bandwidths stems from 6G's pursuit of higher data transmission rates, which drives the demand for a greater transmission bandwidth. However, the spectrum resources held by an individual operator are not necessarily contiguous, and may include multiple fragmented bandwidth resources. The emergence of in-band full duplex is driven by its ability to significantly improve the utilization efficiency of time and frequency resources, which can even be doubled in an ideal scenario.

However, at present, there is no corresponding solution for resource indication for in-band full duplex in discontinuous spectrum scenarios.

## SUMMARY

The present application provides a communication method and apparatus, providing a solution for indicating a duplex type for time-domain resources, so as to achieve full duplex transmission across an entire discontinuous spectrum.

For the purpose above, the present application provides the following technical solutions.

In a first aspect, a communication method is provided. The communication method comprises: receiving first configuration information, wherein the first configuration information indicates a duplex type for time-domain resource units, the duplex type including full duplex; performing uplink transmission, downlink transmission, and/or simultaneous uplink and downlink transmissions according to the first configuration information.

Optionally, the first configuration information includes a position of a time-domain resource unit with the duplex type of uplink, downlink, full duplex, or flexible.

Optionally, the first configuration information includes an absolute position of a time-domain resource unit with the duplex type of uplink, downlink, or flexible, and a relative position of a time-domain resource unit with the duplex type of full duplex within a time-domain resource unit with the duplex type of non-full duplex.

Optionally, the communication method further comprises: receiving second configuration information, wherein the second configuration information includes positions of a first frequency-domain resource unit with the duplex type of uplink and a second frequency-domain resource unit with the duplex type of downlink, wherein the first configuration information includes a position of a first time-domain resource unit with the duplex type of full duplex, wherein the first time-domain resource unit corresponds to the first frequency-domain resource unit and/or the second frequency-domain resource unit.

Optionally, the receiving first configuration information comprises: receiving a bitmap, wherein each bit in the bitmap corresponds to a respective time-domain resource unit, and each bit indicates whether the duplex type is full duplex; or, receiving higher layer signaling, wherein the higher layer signaling includes the position of the first time-domain resource unit.

Optionally, the first configuration information indicates that the duplex type for the time-domain resource units is full duplex, and the communication method further comprises: receiving third configuration information, wherein the third configuration information includes a position of a second time-domain resource unit with the duplex type of uplink and/or a position of a third time-domain resource unit with the duplex type of downlink.

Optionally, a bitmap is received, wherein each bit in the bitmap corresponds to a respective time-domain resource unit, and a value of the bit being a target value indicates the duplex type of uplink or the duplex type of downlink.

Optionally, the receiving first configuration information comprises: periodically receiving the first configuration information.

Optionally, the communication method further comprises: receiving fourth configuration information, wherein the fourth configuration information indicates the duplex type of frequency-domain resource units.

Optionally, the fourth configuration information includes a common configuration applicable to multiple frequency-domain resource units and a dedicated configuration for a target frequency-domain resource unit.

Optionally, the receiving fourth configuration information comprises: receiving cell-specific higher layer signaling, wherein the cell-specific higher layer signaling includes the common configuration; and receiving device-specific higher layer signaling, wherein the device-specific higher layer signaling includes the dedicated configuration.

Optionally, the fourth configuration information includes a first set of frequency-domain resource units with the duplex type of uplink, and a second set of frequency-domain resource units with the duplex type of downlink.

Optionally, a frequency-domain resource unit overlapping between the first set of frequency-domain resource units and the second set of frequency-domain resource units has the duplex type of full duplex.

Optionally, the fourth configuration information indicates that the duplex type for the first frequency-domain resource unit is full duplex, and the method further comprises: receiving a third configuration, wherein the third configuration indicates whether the duplex type for the first frequency-domain resource unit is time division duplex or in-band full duplex; or, based on the first frequency-domain resource unit being configured with time division duplex in the time domain, determining that the duplex type for the first frequency-domain resource unit is time division duplex; otherwise, determining that the duplex type for the first frequency-domain resource unit is in-band full duplex.

Optionally, the frequency-domain resource unit is selected from a subband, a resource block RB, and a resource element RE.

In a second aspect, the present application further discloses a communication method. The communication method comprises: sending first configuration information, wherein the first configuration information indicates a duplex type for time-domain resource units, the duplex type including full duplex; and performing uplink transmission, downlink transmission, and/or simultaneous uplink and downlink transmissions according to the first configuration information.

In a third aspect, the present application further discloses a communication apparatus. The communication apparatus comprises: a communication module, configured to receive first configuration information, wherein the first configuration information indicates a duplex type for time-domain resource units, the duplex type including full duplex; and the communication module is further configured to perform uplink transmission, downlink transmission, and/or simultaneous uplink and downlink transmissions according to the first configuration information.

In a fourth aspect, the present application further discloses a communication apparatus. The communication apparatus comprises: a communication module, configured to send first configuration information, wherein the first configuration information indicates a duplex type for time-domain resource units, the duplex type including full duplex; and the communication module is further configured to perform uplink transmission, downlink transmission, and/or simultaneous uplink and downlink transmissions according to the first configuration information.

In a fifth aspect, a computer-readable storage medium is provided, which stores computer programs. The computer programs, when executed by a processor, cause any one of the methods provided in the first aspect or the second aspect to be performed.

In a sixth aspect, a communication apparatus is provided, which comprises a memory and a processor. The memory stores thereon computer programs executable on the processor. The computer programs, when executed by the processor, cause any one of the methods provided in the first aspect to be performed.

In a seventh aspect, a communication apparatus is provided, which comprises a memory and a processor, wherein the memory stores thereon computer programs executable on the processor, wherein the computer programs, when executed by the processor, cause any one of the methods provided in the second aspect to be performed.

In an eighth aspect, a computer program product is provided, which stores computer programs thereon. The computer programs, when executed by a processor, cause any one of the methods provided in the first aspect or the second aspect to be performed.

In a ninth aspect, a communication system is provided, which comprises the terminal device and the network device mentioned above.

In a tenth aspect, an embodiment of the present application also provides a chip (or an apparatus for data transmission) which has computer programs stored thereon. The computer programs, when executed by the chip, cause the steps of the methods mentioned above to be performed.

In an eleventh aspect, an embodiment of the present application further provides a chip system for use in a terminal. The chip system comprises at least one processor and an interface circuit, wherein the interface circuit is interconnected with the at least one processor via links. The at least one processor is configured to execute instructions to perform any one of the methods provided in the first aspect or the second aspect.

Compared with the prior art, the technical solutions of the present application have the following effects.

In a technical solution of the present application, a terminal device receives first configuration information, wherein the first configuration information indicates a duplex type for time-domain resource units, the duplex type including full duplex; and performs uplink transmission, downlink transmission, and/or simultaneous uplink and downlink transmissions according to the first configuration information. The technical solution of the present application achieves the configuration of the duplex type for time-domain resource units through the first configuration information. Also, by introducing a new duplex type of full duplex, it enables full duplex transmission across the entire discontinuous spectrum, thereby enhancing the communication quality.

Furthermore, the first configuration information includes a position of a time-domain resource unit with the duplex type of uplink, downlink, full duplex, or flexible. In the technical solution of the present application, by introducing a new full duplex type and jointly configuring the positions of a time-domain resource unit of this new full duplex type and a time-domain resource unit of another duplex type, the configuration of the duplex type for the entire time-domain resources on the basis of time division duplex.

Furthermore, the first configuration information includes an absolute position of a time-domain resource unit with the duplex type of uplink, downlink, or flexible, and a relative position of a time-domain resource unit with the duplex type of full duplex within the time-domain resource unit with the duplex type of flexible. By configuring the relative position of the time-domain resource unit with the duplex type of full duplex within the time-domain resource unit with the duplex type of flexible, the technical solution of the present application enables the configuration of the time-domain resource with the duplex type of full duplex on the basis of time division duplex, enhancing the flexibility of duplex type configuration.

Furthermore, the terminal device receives fourth configuration information, wherein the fourth configuration information includes positions of a first frequency-domain resource unit with the duplex type of uplink and a second frequency-domain resource unit with the duplex type of downlink. The first configuration information includes a position of a first time-domain resource unit with the duplex type of full duplex, wherein the first time-domain resource unit corresponds to the first frequency-domain resource unit and/or the second frequency-domain resource unit. In the present application, the position of the first time-domain resource unit with the duplex type of full duplex is further configured on the basis of frequency division duplex, thereby enabling the configuration of in-band full duplex and enhancing the flexibility of duplex type configuration.

## BRIEF DESCRIPTION OF THE DRAWINGS

FIG. 1 is an interaction flowchart of a communication method provided in an embodiment of the present application;

FIG. 2 is a schematic diagram of a duplex configuration for time-domain resource units provided in an embodiment of the present application;

FIG. 3 is a schematic diagram of another duplex configuration for time-domain resource units provided in an embodiment of the present application;

FIG. 4 is a schematic diagram of yet another duplex configuration for time-domain resource units provided in an embodiment of the present application;

FIG. 5 is a schematic diagram of yet another duplex configuration for time-domain resource units provided in an embodiment of the present application;

FIG. 6 is an interaction flowchart of another communication method provided in an embodiment of the present application;

FIG. 7 is a schematic diagram of a duplex configuration provided in an embodiment of the present application;

FIG. 8 is a schematic diagram of another duplex configuration provided in an embodiment of the present application;

FIG. 9 is a schematic structural diagram of a communication apparatus provided in an embodiment of the present application;

FIG. 10 is a schematic hardware block diagram of a communication apparatus provided in an embodiment of the present application.

## DETAILED DESCRIPTION

The communication systems suitable for the embodiments of the present application include, but are not limited to, Long Term Evolution (LTE) systems, the 5th-generation (5G) systems, New Radio (NR) systems, and future evolved systems or hybrid communication systems. The 5G system may be a Non-Standalone (NSA) 5G system or a StandAlone (SA) 5G system. The technical solutions of the present application may also be applied to different network architectures, including but not limited to a relay network architecture, a dual-connectivity architecture, a Vehicle-to-Everything architecture, etc.

The present application involves communications between a terminal device and a network device.

The network device in the embodiments of the present application may also be referred to as an access network device. For example, it may be a base station (BS) (also referred to as base station device). A network device is an apparatus deployed in a Radio Access Network (RAN) to provide wireless communication functionalities.

For example, the device providing functions of a base station in a 2nd-Generation (2G) network includes a Base Transceiver Station (BTS). The device providing functions of a base station in a 3rd-Generation (3G) network includes a NodeB. The device providing functions of a base station in a 4th-Generation (4G) network includes an evolved NodeB (eNB). The device providing functions of a base station in a Wireless Local Area Network (WLAN) is an Access Point (AP). The device providing functions of a base station in NR is a next generation Node Base station (gNB), and a next-generation evolved NodeB (ng-eNB), wherein the gNB communicates with a terminal device using NR, and the ng-eNB communicates with a terminal device using Evolved Universal Terrestrial Radio Access (E-UTRA), and both the gNB and the ng-eNB may be connected to a 5G core network. The network device in the embodiments of the present application also encompasses a device providing functions of a base station in future new communication systems, etc.

The terminal equipment/terminal device in the embodiments of the present application may refer to various forms of an access terminal, a subscriber unit, a subscriber station, a mobile terminal, a Mobile Station (MS), a remote station, a remote terminal, a mobile device, a user terminal, a wireless communication device, a user agent, or a user equipment. The terminal device may also be a cellular phone, a cordless phone, a Session Initiation Protocol (SIP) phone, a Wireless Local Loop (WLL) station, a Personal Digital Assistant (PDA), a handheld device with wireless communication function, a computing device, or other processing devices connected to a wireless modem, an in-vehicle device, a wearable device, a terminal equipment/terminal device in a future 5G network, or a terminal equipment/terminal device in a future evolved Public Land Mobile Network (PLMN), etc., which is not limited in the embodiments of the present application. The terminal device may also be referred to as a User Equipment (UE), a terminal, and the like.

As stated in the background, at present, there is no corresponding solution for resource indication for in-band full duplex in discontinuous spectrum scenarios.

The future evolution of full duplex technology is anticipated as follows: the overall trend may progress through four stages. Given the divergence in base station types deployed by different operators and the variation in the duplex types supported by terminal devices themselves, various combinations are possible.

When one side uses in-band full duplex type, the combination of the duplex types of a network side and a terminal device side can be categorized into the following five classes.

Class 1: in-band full duplex on the network side, and half duplex on the terminal device side, e.g., Frequency Division Duplexing (FDD) or Time Division Duplexing (TDD).

Class 2: in-band full duplex on the network side, and subband half duplex on the terminal device side.

Class 3: in-band full duplex on the network side, and in-band full duplex on the terminal device side.

Class 4: half duplex on the network side, and in-band full duplex on the terminal device side.

Class 5: subband full duplex on the network side, and in-band full duplex on the terminal device side.

The scenarios described in Class 3 and Class 4 may be that a terminal device is roaming, especially an advanced terminal device roams into a legacy mobile network. The technical solution of the present application can be applied to any one of the aforementioned five classes of scenarios.

The technical solution of the present application achieves the configuration of a duplex type for time-domain resource units through the first configuration information. Also, by introducing the new duplex type of full duplex, it enables full duplex transmission across the entire discontinuous spectrum, thereby enhancing the communication quality.

The configuration or configuration information and the like mentioned in the present invention may be indicated by a network layer through higher layer signaling (e.g., RRC) or may be indicated by dynamic signaling indication (e.g., DCI).

In order to make the aforementioned objectives, features, and advantages of the present application more comprehensible, the specific embodiments of the present application are described in detail below with reference to the accompanying drawings.

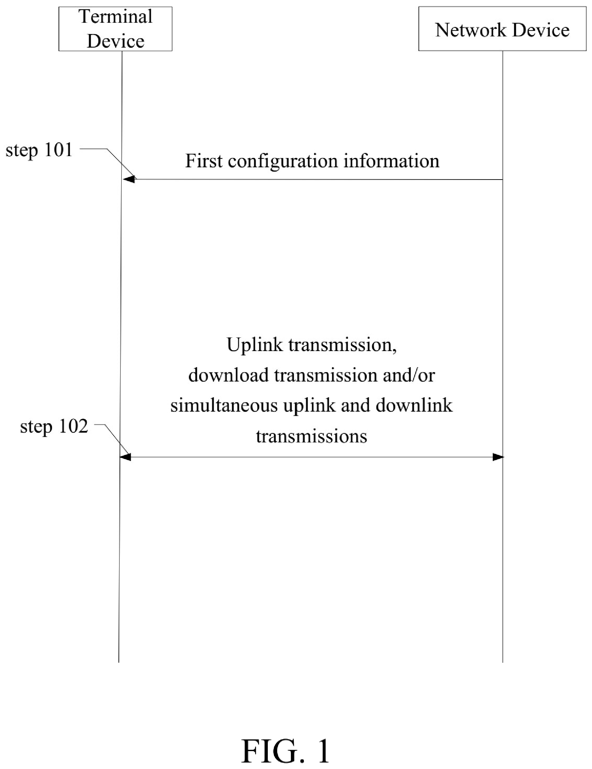

Referring to FIG. 1, the method provided in the present application specifically includes the following steps.

Step 101: A network device sends first configuration information, wherein the first configuration information indicates a duplex type for time-domain resource units, the duplex type including full duplex. Correspondingly, a terminal device receives the first configuration information.

Step 102: The terminal device and the network device perform uplink transmission, downlink transmission, and/or simultaneous uplink and downlink transmissions according to the first configuration information.

It should be pointed out that numbering of the steps in the embodiments does not limit the execution order of the steps.

It should be understood that in specific implementations, the communication method may be implemented in software programs executing on a processor integrated in a chip or chip module. The method can also be implemented in a combination of software and hardware, which is not limited in the present application.

In a non-limiting embodiment, the duplex type is selected from uplink, downlink, and full duplex.

In a non-limiting embodiment, a time-domain resource unit may be any feasible time unit such as a radio frame, a subframe, a slot, or a symbol, which is not limited in the present application.

In the embodiments, the configuration of the duplex type for time-domain resources can be achieved through the first configuration information. To realize in-band full duplex, the terminal device also needs to obtain the configuration of the duplex type for frequency-domain resources.

To achieve the aforementioned objective, the duplex type may be configured independently for each frequency-domain resource unit. In a specific implementation, the duplex type may be configured for each time-domain resource unit over one or more frequency-domain resources via the first configuration information, and the duplex type may be configured for each frequency-domain resource unit within the one or more frequency-domain resources.

Specifically, a frequency-domain resource unit may be the size of the frequency-domain resource occupied by a Resource Block (RB), the size of the frequency-domain resource occupied by a Resource Element (RE), the size of the frequency-domain resource occupied by an integer multiple of an RB, the size of the frequency-domain resource occupied by an integer multiple of an RE, or a subband, or the like.

For example, the terminal device may obtain the duplex type for the time-domain resources corresponding to one or more subbands according to the first configuration information. The duplex type for the one or more subbands may be obtained through other configuration information.

It should be noted that the first configuration information for the duplex type for time-domain resources and other configuration information for the duplex type for frequency-domain resources may be included in the same higher layer signaling or in different higher layer signaling, which is not limited in the present application.

In another specific implementation, the duplex type for each frequency-domain resource unit may be configured first. Subsequently, on this basis, time-domain resource unit with the duplex type of full duplex may be additionally indicated.

In a non-limiting embodiment, the first configuration information includes a position of a time-domain resource unit with the duplex type of uplink (which may also be referred to as half duplex uplink), downlink (which may also be referred to as half duplex downlink), full duplex, or flexible.

The duplex types in the embodiments are independent from each other. Specifically, the first configuration information may include absolute positions of time-domain resource units of various duplex types. For example, the absolute position includes a start position and an offset of a time-domain resource unit.

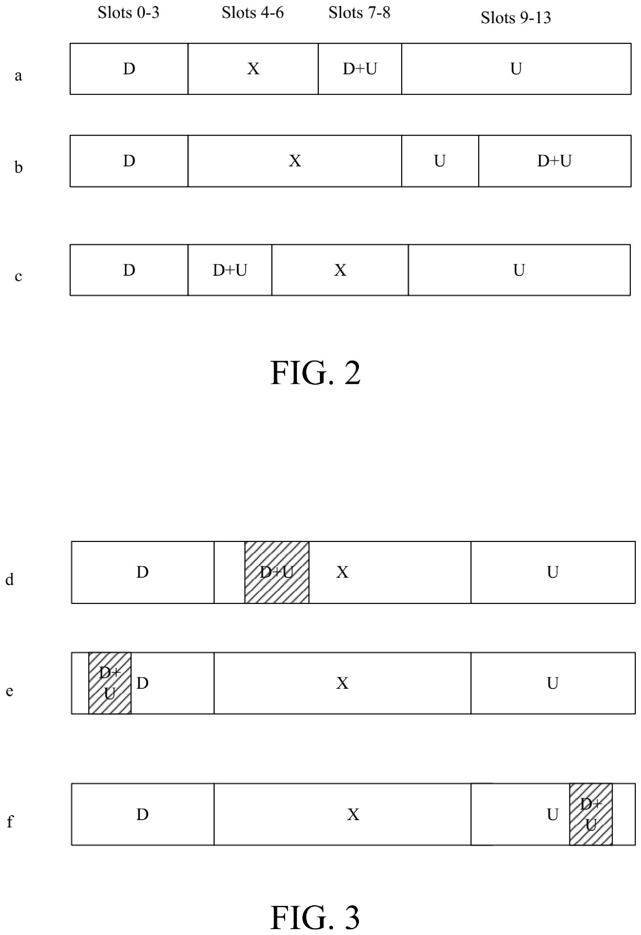

Reference is made to FIG. 2 for details, wherein D denotes the duplex type of downlink, U indicates the duplex type of uplink, X indicates the duplex type of flexible (corresponding to a flexible resource in existing communication systems), and D+U indicates the duplex type of full duplex. D, U, X or D+U may include one or more identical time-domain resource units, or may include one or more time-domain resource units of different types. For example, D, U, X, or D+U may include one or more slots and, optionally, may additionally include one or more symbols. Alternatively, D, U, X, or D+U may include one or more symbols. The above explanations are also applicable to other embodiments of the present invention.

Taking slot as an example of the time-domain resource unit, in the duplex configuration shown in FIG. 2a, the duplex type for slots 0 to 3 is downlink, the duplex type for slots 4 to 6 is flexible, the duplex type for slots 7 and 8 is full duplex, and the duplex type for slots 9 to 13 is uplink. The slot configuration illustrated in FIG. 2a may be taken as a basic configuration pattern; that is, D, X, D+U, and U form a basic pattern, which then recurs periodically in the time domain.

In the duplex configuration shown in FIG. 2b, the duplex type for slots 0 to 3 is downlink, the duplex type for slots 4 to 8 is flexible, the duplex type for slots 9 and 10 is full duplex, and the duplex type for slots 11 to 13 is uplink. The slot configuration illustrated in FIG. 2b may be taken as a basic configuration pattern; that is, D, X, U, and D+U form a basic pattern, which then recurs periodically in the time domain.

In the duplex configuration shown in FIG. 2c, the duplex type for slots 0 to 3 is downlink, the duplex type for slot 4 is full duplex, the duplex type for slots 6 to 8 is flexible, and the duplex type for slots 9 to 13 is uplink. The slot configuration illustrated in FIG. 2c may be taken as a basic configuration pattern; that is, D, D+U, X, and U form a basic pattern, which then recurs periodically in the time domain.

Optionally, other basic patterns may be other possible combinations of D, U, X, and D+U, which is not limited in the present invention. In another non-limiting embodiment, the first configuration information includes an absolute position of a time-domain resource unit with the duplex type of uplink, downlink, or flexible, and a relative position of a time-domain resource unit with the duplex type of full duplex within a time-domain resource unit with the duplex type of flexible.

In this embodiment, the time-domain resource unit with the duplex type of full duplex is nested within a time-domain resource of another type. Therefore, the first configuration information includes the relative position of the time-domain resource with the duplex type of full duplex, and the absolute position of the time-domain resource unit of another duplex type. The absolute position may be derived from the start time-domain position, and/or the end time-domain position, and/or the time-domain duration of the time-domain resource with the duplex type of full duplex.

Taking slot as an example of the time-domain resource unit, in the duplex configuration shown in FIG. 3d, a slot with the duplex type of full duplex is nested within a time-domain resource unit with the duplex type of flexible.

In the duplex configuration shown in FIG. 3e, a slot with the duplex type of full duplex is nested within a time-domain resource unit with the duplex type of downlink.

In the duplex configuration shown in FIG. 3f, a slot with the duplex type of full duplex is nested within a time-domain resource unit with the duplex type of uplink.

In a non-limiting embodiment, the terminal device may receive fourth configuration information, wherein the fourth configuration information includes positions of a first frequency-domain resource unit with the duplex type of uplink and a second frequency-domain resource unit with the duplex type of downlink. The first configuration information includes a position of a first time-domain resource unit with the duplex type of full duplex, wherein the first time-domain resource unit corresponds to the first frequency-domain resource unit and/or the second frequency-domain resource unit.

In the embodiment of the present invention, on the basis of Frequency Division Duplexing (FDD), some time-domain resource units are configured to perform in-band full duplex transmission.

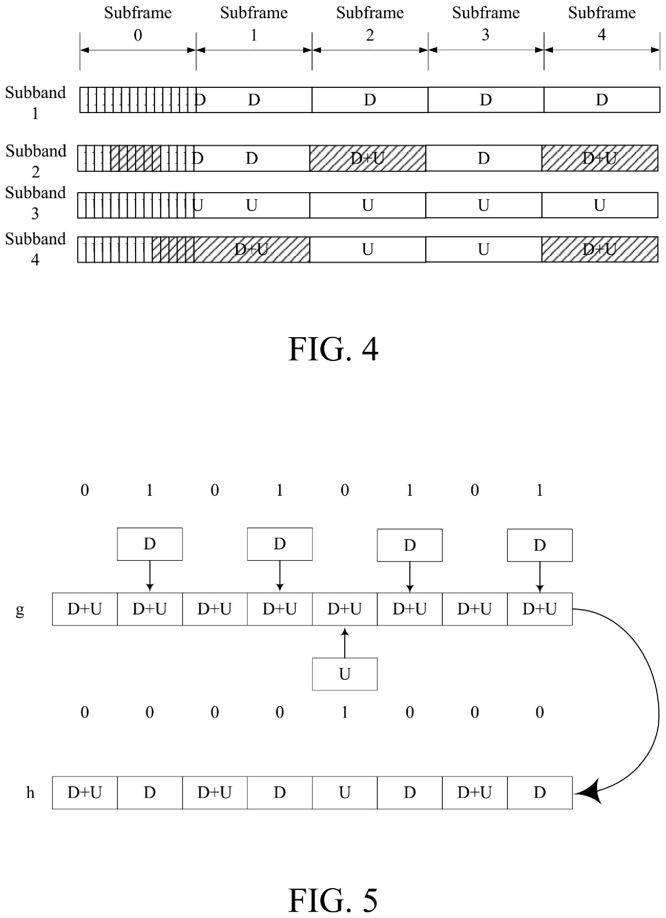

Referring to FIG. 4 for details, FDD is configured on subbands 1 to 4, wherein the duplex type for subbands 1 and 2 is downlink, and the duplex type for subbands 3 and 4 is uplink.

On the basis of the FDD as above, the duplex type is configured accordingly for subframes 0 to 4. Specifically, on subband 2, the duplex type of full duplex is configured for symbols 4 to 9 of subframe 0 and all symbols of subframe 2. In this case, the first time-domain resource unit includes symbols 4 to 9 of subframe 0 and all symbols of subframe 2.

On subband 4, the duplex type of full duplex is configured for symbols 9 to 13 of subframe 0 and all symbols of subframe 1. In this case, the first time-domain resource unit includes symbols 9 to 13 of subframe 0 and all symbols of subframe 1.

Furthermore, the first configuration information in the embodiment of the present invention may be repeated periodically. For example, FIG. 4 illustrates that the first configuration information includes the duplex configuration for five subframes (i.e., 5 ms). The repetition period may be set to 5 ms, such that for every five subsequent subframes, the duplex configuration is identical to that for the five subframes shown in FIG. 4.

In a specific embodiment, the terminal device may receive a bitmap, wherein each bit in the bitmap corresponds to a respective time-domain resource unit, and each bit indicates whether the duplex type is full duplex. The bitmap may be periodically repeated in the time domain.

For example, a bitmap of 11001 corresponds to the duplex configuration for five subframes, wherein "1" indicates the duplex type of full duplex and "0" indicates the duplex type of non-full duplex; alternatively, "0" indicates the duplex type of full duplex and "1" indicates the duplex type of non-full duplex.

In another specific embodiment, the terminal device receives higher layer signaling, which includes the position of the first time-domain resource unit.

Specifically, the position of the first time-domain resource unit may be carried in Downlink Control Information (DCI). This approach enables dynamic configuration of time-domain resources with the duplex type of full duplex, providing greater flexibility.

In a non-limiting embodiment, the duplex type for time-domain resource units may be configured as full duplex via the first configuration information. Subsequently, the position of a second time-domain resource unit with the duplex type of uplink and/or the position of a third time-domain resource unit with the duplex type of downlink may be indicated via third configuration information.

In the embodiment of the present invention, a time-domain resource unit has an initial duplex type, which may be full duplex, and which may specifically be configured via the first configuration information. The third configuration information may include the position of the second time-domain resource unit with the duplex type of uplink and/or the position of the third time-domain resource unit with the duplex type of downlink, thereby completing the duplex configuration for time-domain resources.

More specifically, the third configuration information may be in the form of a bitmap, wherein a value of the bit being a target value indicates the duplex type of uplink or the duplex type of downlink. For example, the target value is 1. Different bitmaps are used for configuring the duplex type of uplink and the duplex type of downlink, respectively.

Reference is made to FIG. 5 for details. As shown in FIG. 5, the duplex type for all eight symbols is full duplex D+U. The second time-domain resource unit with the duplex type of uplink includes the fifth symbol, and the corresponding bitmap is 00001000. Similarly, the third time-domain resource unit with the duplex type of downlink includes the second, fourth, sixth, and eighth symbols, and the corresponding bitmap is 01010101. The bitmaps may be periodically repeated in the time domain.

In a variant embodiment, the duplex type for the time-domain resource units may be configured as uplink via the first configuration information. The third configuration information may include the positions of time-domain resources with the duplex type of full duplex and/or the positions of time-domain resources with the duplex type of downlink, thereby completing the duplex configuration for the time-domain resources. The position of the time-domain resource may be derived from the start time-domain position, and/or the end time-domain position, and/or the time-domain duration thereof.

In another variant embodiment, the duplex type for the time-domain resource units may be configured as downlink via the first configuration information. The third configuration information may include the positions of time-domain resources with the duplex type of full duplex and/or the positions of time-domain resources with the duplex type of uplink, thereby completing the duplex configuration for the time-domain resources. The position of the time-domain resource may be derived from the start time-domain position, and/or the end time-domain position, and/or the time-domain duration thereof.

Furthermore, the third configuration information in the embodiment of the present invention may be periodically repeated. The size and/or offset value of the period may be negotiated between the network device and the terminal device in advance, or stipulated by a communication standard protocol, or configured by the network side through higher layer signaling (e.g., RRC) or dynamic signaling (e.g., DCI), which is not limited in the present application.

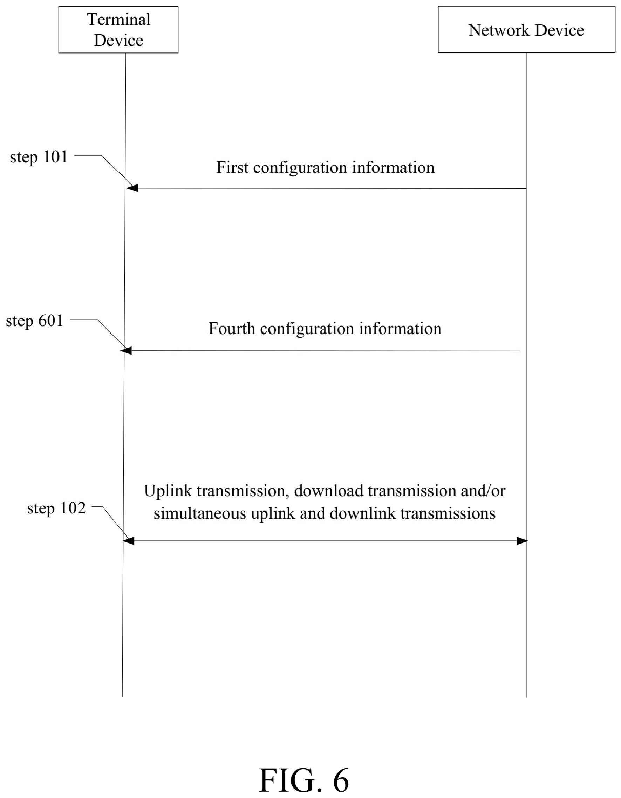

In a non-limiting embodiment, the present application further discloses a communication method. Reference is made to FIG. 6 for details. The method may further include step 601: the network device sends fourth configuration information to the terminal device, wherein the fourth configuration information indicates a duplex type of frequency-domain resource units. Correspondingly, the terminal device receives the fourth configuration information.

In the embodiments, the duplex configuration of time-domain resources is achieved through the first configuration information, while the duplex configuration of frequency-domain resources is achieved through the fourth configuration information. A detailed description of the duplex configuration scheme for frequency-domain resources is provided below.

Specifically, on some subbands with bandwidths smaller than a preset bandwidth, the network side may employ an in-band full duplex configuration. Conversely, on some subbands with bandwidths greater than or equal to the preset bandwidth, the network side may employ a conventional half duplex (i.e., downlink only or uplink only) configuration. This is because full duplex places higher demands on interference resistance capability, and such capability is inversely proportional to the subband bandwidth. Therefore, to ensure communication quality, the network side may employ the in-band full duplex configuration on the subband with a bandwidth smaller than the preset bandwidth. The preset bandwidth may be determined in a predefined manner, or the value of the preset bandwidth may be determined according to the full duplex capability of the network side device or the terminal device.

Similarly, on the terminal device side, the terminal device may employ the in-band full duplex configuration on some subbands with bandwidths smaller than the preset bandwidth. Conversely, on some subbands with bandwidths greater than or equal to the preset bandwidth, the terminal device may employ the conventional half duplex configuration.

In a non-limiting embodiment, the network device may send its capabilities to the terminal device via broadcast signaling or Radio Resource Control (RRC) signaling. Specifically, the capabilities of the network device include the bandwidth, and/or center frequency, and/or subband in which the network device supports for in-band full duplex.

In a non-limiting embodiment, the terminal device may also report its capabilities to the network device via higher layer signaling. Specifically, the capabilities of the terminal device include the bandwidth, frequency, and/or subband in which the terminal device supports for in-band full duplex.

Furthermore, when reporting its capabilities, the terminal device may report the device type together.

For a terminal device supporting in-band full duplex, its device type is different from that of other terminal devices supporting half duplex or SBFD. In other words, the terminal device supporting in-band full duplex has a new device type. This new device type for the terminal device may be considered as an enhancement of TDD/FDD or an enhancement of SBFD.

It should be noted that the aforementioned new device type for the terminal device may be any other feasible terminology and may be defined in a communication standard protocol, which is not limited in the present application.

In a non-limiting embodiment, the duplex type for a frequency-domain resource unit is selected from uplink, downlink, and full duplex.

Specifically, the full duplex may include in-band full duplex and time division duplex. Therefore, when the terminal device obtains via the first configuration information that the duplex type is full duplex, it further needs to distinguish between in-band full duplex and time division duplex.

Method 1: The terminal device receives a third configuration, wherein the third configuration indicates whether the duplex type for a first frequency-domain resource unit is time division duplex or in-band full duplex.

For example, the second configuration information occupies one bit: when the value of this bit is 1, it indicates that the duplex type is in-band full duplex; when the value of this bit is 0, it indicates that the duplex type is time division duplex. Alternatively, when the value of this bit is 0, it indicates that the duplex type is in-band full duplex; when the value of this bit is 1, it indicates that the duplex type is TDD.

Method 2: The terminal device distinguishes between in-band full duplex and time division duplex based on whether time division duplex is configured in the time domain on a first frequency-domain resource unit. For example, it is determined whether a legacy TDD-DL-UL-SlotConfiguration is configured on the frequency-domain resource unit. If the legacy TDD-DL-UL-SlotConfiguration is configured on the frequency-domain resource unit, the duplex type is indicated as TDD, otherwise, the duplex type is indicated as in-band full duplex.

For the terminal device, it may obtain the duplex configuration of all subbands, or it may only obtain the duplex configuration of the subband in which it is located. The duplex configuration may be UE-specific configuration information or cell-specific configuration information.

In a non-limiting embodiment, the fourth configuration information includes a common configuration applicable to multiple frequency-domain resource units and a dedicated configuration for a target frequency-domain resource unit, wherein the dedicated configuration includes full duplex. Specifically, the network device may send cell-specific higher layer signaling to the terminal device, wherein the cell-specific higher layer signaling includes the common configuration. The network device may send device-specific higher layer signaling to the terminal device, wherein the device-specific higher layer signaling includes the dedicated configuration.

In another non-limiting embodiment, the first configuration information includes a first set of frequency-domain resource units with the duplex type of uplink and a second set of frequency-domain resource units with the duplex type of downlink.

In the embodiments, the frequency-domain resource units with the duplex type of uplink and the frequency-domain resource units with the duplex type of downlink are configured independently.

Furthermore, a frequency-domain resource unit overlapping between the first set of frequency-domain resource units and the second set of frequency-domain resource units has the duplex type of full duplex. It should be noted that, when the duplex type is full duplex, the methods for further distinguishing between TDD and in-band full duplex may be referred to the aforementioned Method 1 and Method 2, which will not be repeated here.

In a non-limiting embodiment, the fourth configuration information may be carried in higher layer signaling. The higher layer signaling may be RRC signaling, Media Access Control (MAC) signaling, broadcast signaling, and the like.

In a specific embodiment, the duplex type of time-frequency resource units is configured via a first matrix and a second matrix. Each first element in the first matrix indicates the duplex type of uplink or flexible, and each second element in the second matrix indicates the duplex type of downlink or flexible. Each of the first element or second element corresponds to one time-frequency resource unit.

Furthermore, for the same time-frequency resource unit, if the corresponding first element indicates the duplex type of uplink and the corresponding second element indicates the duplex type of downlink, then the duplex type of that time-frequency resource unit is full duplex. Correspondingly, for the same time-frequency resource unit, if the corresponding first element indicates the duplex type of uplink and the corresponding second element indicates the duplex type of flexible, then the duplex type of that time-frequency resource unit is uplink. For the same time-frequency resource unit, if the corresponding first element indicates the duplex type of flexible and the corresponding second element indicates the duplex type of downlink, then the duplex type of that time-frequency resource unit is downlink.

In a non-limiting embodiment, in order to reduce signaling overhead, multiple resource units may also be configured to reuse at least one duplex configuration. Specifically, at least one duplex configuration may be indicated via higher layer signaling.

In a non-limiting embodiment, multiple contiguous resource units have the same duplex configuration.

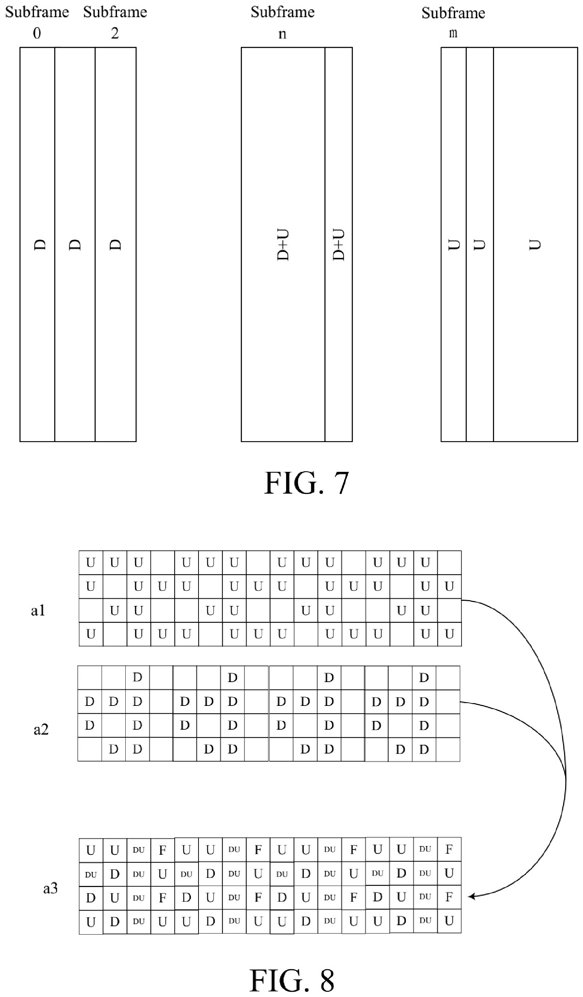

For example, referring to FIG. 7, contiguous subframes 0 to 2 have the same duplex configuration. Contiguous subbands 3 to 4 have the same duplex type of downlink. Contiguous subbands n to n+2 have the same duplex type of full duplex. Contiguous subbands m to n+3 have the same duplex type of uplink.

In a non-limiting embodiment, the higher layer signaling includes multiple duplex configurations and identifiers of resource units associated therewith.

The "duplex configuration" referred to in this embodiment may be a set of multiple duplex types, such as {D, D, D, D+U, D+U, U, U}.

For example, the higher layer signaling includes three duplex configurations: Duplex Configuration 1, Duplex Configuration 2, and Duplex Configuration 3. Each duplex configuration may correspond to one or more slots. For example, the subbands associated with Duplex Configuration 1 include: slot 0, slot 3, slot 5, and slot 7; the slots associated with Duplex Configuration 2 include: slot 2, slot 4, and slot 6; and the slots associated with Duplex Configuration 3 include: slot 1. The duplex configuration may be associated with the slots that have the same duplex configuration by a bitmap, wherein each bit in the bitmap may correspond to one slot. When the bit is 1, it indicates that the slot is associated with the duplex configuration, and when the bit is 0, it indicates that the slot is not associated with the duplex configuration. Alternatively, when the bit is 0, it indicates that the slot is associated with the duplex configuration, and when the bit is 1, it indicates that the slot is not associated with the duplex configuration. Alternatively, the slot indices of all slots that have the same duplex configuration are indicated.

In a non-limiting embodiment, the higher layer signaling includes a first matrix and/or a second matrix for target time-frequency resources. Each first element in the first matrix indicates the duplex type of uplink or flexible, and each second element in the second matrix indicates the duplex type of downlink or flexible. Each of the first element or second element corresponds to one time-frequency resource unit.

In the embodiments, the sizes of the first matrix and the second matrix may be predefined in standard, or negotiated between the terminal device and the network device in advance. The first matrix and the second matrix may repeat periodically over the entire time-frequency resources.

Specifically, a time-frequency resource with the duplex type of flexible may refer to the definition of a flexible symbol in the prior art. The time-frequency resource with the duplex type of flexible may be further configured as uplink, downlink, or full duplex.

Specifically, the first matrix is $\begin{pmatrix} 0,0,1,0 \\ 1,1,1,0 \\ 1,0,1,0 \\ 0,1,1,0 \end{pmatrix}$, wherein "1" indicates the duplex type of uplink, and "0" indicates the duplex type of flexible or undetermined. The duplex type for time-frequency resources corresponding to the first matrix is shown in a1 of FIG. 8, wherein a rectangular area with "U" indicates the duplex type of uplink, and a blank rectangular area indicates the duplex type of flexible. The second matrix is $\begin{pmatrix} 1,1,1,0 \\ 1.0.1.1 \\ 0,1,1,0 \\ 1,0,1,1 \end{pmatrix}$,

wherein "1" indicates the duplex type of downlink, and "0" indicates the duplex type of flexible or undetermined. The duplex type for time-frequency resources corresponding to the second matrix is shown in a2 of FIG. 8, wherein a rectangular area with "D" indicates the duplex type of downlink, and a blank rectangular area indicates the duplex type of flexible.

Furthermore, for the same time-frequency resource unit, if the corresponding first element indicates the duplex type of uplink and the corresponding second element indicates the duplex type of downlink, the duplex type of that time-frequency resource unit may be full duplex. Correspondingly, for the same time-frequency resource unit, if the corresponding first element indicates the duplex type of uplink and the corresponding second element indicates the duplex type of flexible, the duplex type of that time-frequency resource unit may be uplink. For the same time-frequency resource unit, if the corresponding first element indicates the duplex type of flexible and the corresponding second element indicates the duplex type of downlink, the duplex type of that time-frequency resource unit may be downlink. For the same time-frequency resource unit, if the corresponding first element indicates the duplex type of undetermined and the corresponding second element indicates the duplex type of undetermined, the duplex type of that time-frequency resource unit may be flexible.

As shown in a3 of FIG. 8, a rectangular area with "D+U" indicates the duplex type of full duplex, and a rectangular area with "F" indicates the duplex type of flexible.

Furthermore, the higher layer signaling may further include a third matrix for target time-frequency resources, wherein each third element in the third matrix indicates the duplex type of full duplex or flexible. In the embodiments, the third matrix may repeat periodically in the time domain.

In the embodiments, the higher layer signaling may include the first matrix, the second matrix, and the third matrix.

Specifically, the third matrix is $\begin{pmatrix} 0,0,1,0 \\ 1.1.1.0 \\ 1,0,1,0 \\ 0,1,1,0 \end{pmatrix}$,

wherein "1" indicates the duplex type of full duplex, and "0" indicates the duplex type of non-full duplex. The non-full duplex may be downlink, uplink, or flexible. The third matrix may also be applied to a communication system that is originally TDD or FDD, i.e., it can indicate which time-frequency resources in a TDD or FDD system can be used for full duplex.

In a variant embodiment, the higher layer signaling may include the TDD configuration and the third matrix.

In another variant embodiment, the higher layer signaling may include the FDD configuration and the third matrix.

More specific implementations of the embodiments of the present application may be found with reference to the embodiments mentioned above, which will not be repeated herein.

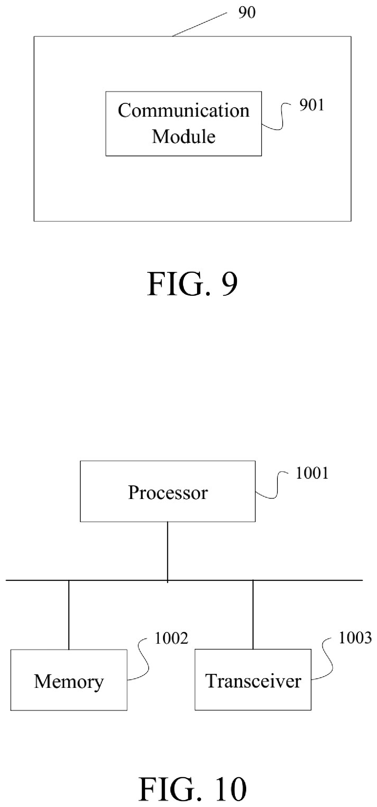

Refer to FIG. 9, which illustrates a communication apparatus 90. The communication apparatus 90 may comprise:

a communication module 901 configured to receive first configuration information, wherein the first configuration information indicates a duplex type for time-domain resource units, the duplex type including full duplex.

The communication module 901 is further configured to perform uplink transmission, downlink transmission, and/or simultaneous uplink and downlink transmissions according to the first configuration information.

In a specific implementation, the above communication apparatus 90 may correspond to a chip with communication function in a terminal device, such as a System-on-a-Chip (SoC) or a base-band chip; or correspond to a chip module with communication function included in a terminal device; or correspond to a chip module having a chip with data processing function; or correspond to a terminal device.

In another embodiment, the communication module 1101 is configured to send first configuration information.

In a specific implementation, the above communication apparatus 90 may correspond to a chip with communication function in a network device, such as an SoC or a base-band chip; or correspond to a chip module with communication function included in a network device; or correspond to a chip module having a chip with data processing function; or correspond to a network device.

Other relevant description of the communication apparatus 90 may be found with reference to relevant description in the embodiments mentioned above, which will not be repeated herein.

The various modules/units included in various apparatuses and products described in the above embodiments may be software modules/units, hardware modules/units, or partly software modules/units and partly hardware modules/units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal device, each module/unit included may be implemented in hardware such as circuits, different modules/units may be located in the same component (e.g., chip, circuit module, etc.) or different components of the terminal device, or at least some modules/units may be implemented by software programs executing on a processor integrated into the terminal device, and the remaining (if any) modules/units may be implemented in hardware such as circuits.

An embodiment of the present application also discloses a storage medium, which is a computer-readable storage medium and has computer programs stored thereon. The computer programs, when executed, may cause the steps of the methods shown in FIG. 1 to FIG. 3 to be performed. The storage medium may include a Read-Only Memory (ROM), a Random Access Memory (RAM), a magnetic disk, or an optical disk and the like. The storage medium may also include a non-volatile memory or a non-transitory memory, etc.

Referring to FIG. 10, an embodiment of the present application further provides a schematic hardware block diagram of a communication apparatus. The communication apparatus comprises a processor 1001, a memory 1002 and a transceiver 1003.

The processor 1001 may be a general-purpose central processing unit (CPU), a micro-processor, an application-specific integrated circuit (ASIC), or one or more integrated circuits for management of executing the programs of the solutions of the present application. The processor 1001 may also include multiple CPUs, and the processor 1001 may be either a single-CPU processor or a multi-CPU processor. The term "processor" herein may refer to one or more devices, circuits, or processing cores which process data (such as computer program instructions).

The memory 1002 may be a ROM or other type of static storage device capable of storing static information and instructions, a RAM or other type of dynamic storage device capable of storing information and instructions, electrically erasable programmable read-only memory (EEPROM), compact-disc read-only memory (CD-ROM) or other optical-disc storage, optical-disk storage (including a compressed optical disk, a laser disk, an optical disk, a Digital Versatile Disk, a Blu-ray disk, etc.), a magnetic-disk storage medium or other magnetic storage device, or any other medium capable of carrying or storing desired program codes in the form of instructions or data structures and accessible by a computer, which is not limited in the embodiments of the present application. The memory 1002 may be standalone (in this case, the memory 1002 may be located external or internal to the communication apparatus), or may be integrated with the processor 1001. The memory 1002 may contain computer program codes. The processor 1001 is configured to execute computer program codes stored in the memory 1002, thereby implementing the method provided in the embodiments of the present application.

The processor 1001, the memory 1002, and the transceiver 1003 are connected through a bus. The transceiver 1003 is configured to communicate with other devices or communication networks. Optionally, the transceiver 1003 may include a transmitter and a receiver. The device configured to implement receiving function in the transceiver 1003 may be regarded as a receiver, which is configured to perform receiving steps in the embodiments of the present application. The device configured to implement transmitting function in the transceiver 1003 may be regarded as a transmitter, which is configured to perform transmitting steps in the embodiments of the present application.

When the schematic structural diagram shown in FIG. 10 is used to illustrate a structure of the terminal device involved in the above embodiments, the processor 1001 is configured to control and manage actions of the terminal device. For example, the processor 1001 is configured to support the terminal device in performing steps 101 and 102 in FIG. 1, or step 601 in FIG. 6, and/or actions performed by the terminal device in other processes described in the embodiments of the present application. The processor 1001 may communicate with other network entities (e.g., the above network device) via the transceiver 1003. The memory 1002 is configured to store program codes and data of the terminal device. The processor, when executing the computer programs, may control the transceiver 1003 to receive one or more of RRC signaling and DCI.

When the schematic structural diagram shown in FIG. 10 is used to illustrate a structure of the network device involved in the above embodiments, the processor 1001 is configured to control and manage actions of the network device. For example, the processor 1001 is configured to support the network device in performing steps 101 and 102 in FIG. 1, or step 601 in FIG. 6, and/or actions performed by the network device in other processes described in the embodiments of the present application. The processor 1001 may communicate with other network entities (e.g., the above terminal device) via the transceiver 1003. The memory 1002 is configured to store program codes and data of the network device. The processor, when executing the computer programs, may control the transceiver 1003 to send one or more of RRC signaling and DCI.

The unidirectional communication link from an access network to a terminal device is defined as downlink in the embodiments of the present application, data transmitted on the downlink is defined as downlink data, and the transmission direction of the downlink data is defined as downlink direction. The unidirectional communication link from a terminal device to an access network is defined as uplink in the embodiments of the present application, data transmitted on the uplink is defined as uplink data, and the transmission direction of the uplink data is defined as uplink direction.

It should be understood that, in the present application, the term "and/or" merely describes a relationship between related objects, indicating that there may be three relationships. For example, A and/or B may indicate: A alone, both A and B, or B alone. In addition, the character "/" in the specification indicates that the related objects before and after it are in an "or" relationship.

The term "a plurality of" in the embodiments of the present application means two or more.

The description such as first and second in the embodiments of the present application is merely used for purposes of illustration and distinguishing of the described objects. It neither indicates a sequential order, nor represents any limitation on the number of devices in the embodiments of the present application, and may not constitute any limitation on the embodiments of the present application.

The term "connection" as used in the embodiments of the present application refers to various forms of connection which enables communication between devices, such as direct connection or indirect connection, which is not limited in the embodiments of the present application.

The above embodiments may be implemented in whole or in part in software, hardware, firmware, or any other combination thereof. When implemented using software, the above embodiments may be implemented in whole or in part in the form of a computer program product. The computer program product includes one or more computer instructions or computer programs. When the computer instructions or computer programs are loaded and executed on a computer, the processes or functionalities described in the embodiments of the present application are generated in whole or in part. The computer may be a general-purpose computer, a special-purpose computer, a computer network, or other programmable devices. The computer instructions may be stored in a computer-readable storage medium or transmitted from one computer-readable storage medium to another computer-readable storage medium. For example, the computer instructions may be transmitted from a website, computer, server, or data center to another website, computer, server, or data center via wired or wireless means.

It should be understood that in the various embodiments of the present application, the sequence numbers of the processes do not imply the order of execution. The execution sequence of the processes should be determined by their function and internal logic, and should not constitute any limitation on the implementation process of the embodiments of the present application.

tion.

In the several embodiments provided in the present application, it should be understood that the disclosed methods, apparatuses, and systems may be implemented in other ways. For example, the apparatus embodiments described above are merely illustrative; for example, the division of units is only a logical function division, and in actual implementation, there may be other division ways; for example, multiple units or components may be combined or integrated into another system, or some features may be ignored or not executed. In addition, the coupling or direct coupling or communication connection between each other shown or discussed may be indirect coupling or communication connection through some interfaces, apparatuses, or units, and may be electrical, mechanical, or other forms.

The units described as separate components may or may not be physically separated, and the components shown as units may or may not be physical units, that is, they may be located in one place, or may be distributed to multiple network units. Some or all of the units may be selected according to actual needs to achieve the purpose of the solutions of the embodiments.

In addition, the functional units in the various embodiments of the present application may be integrated into one processing unit, or each unit may exist alone physically, or two or more units may be integrated into one unit. The above integrated units may be implemented in the form of hardware or in the form of hardware plus software functional units.

The integrated units implemented in the form of software functional units may be stored in a computer-readable storage medium. The software functional units are stored in a storage medium and include several instructions to cause a computer device (which may be a personal computer, server, or network device, etc.) to perform some of the steps of the methods described in the various embodiments of the present application.

Although the present application is disclosed as above, the present application is not limited thereto. Any person skilled in the art may make various changes and modifications without departing from the spirit and scope of the present application. Therefore, the protection scope of the present application shall be subject to the scope defined by the claims.

**Claims**

1. A communication method, **characterized in that**, the communication method comprises:

   receiving first configuration information, wherein the first configuration information indicates a duplex type for time-domain resource units, the duplex type including full duplex;
   performing uplink transmission, downlink transmission, and/or simultaneous uplink and downlink transmissions according to the first configuration information.

2. The communication method according to claim 1, **characterized in that**, the first configuration information includes a position of a time-domain resource unit with the duplex type of uplink, downlink, full duplex, or flexible.

3. The communication method according to claim 1, **characterized in that**, the first configuration information includes an absolute position of a time-domain resource unit with the duplex type of uplink, downlink, or flexible, and a relative position of a time-domain resource unit with the duplex type of full duplex within a time-domain resource unit with the duplex type of non-full duplex.

4. The communication method according to claim 1, **characterized in that**, the communication method further comprises:
receiving second configuration information, wherein the second configuration information includes positions of a first frequency-domain resource unit with the duplex type of uplink and a second frequency-domain resource unit with the duplex type of downlink, wherein the first configuration information includes a position of a first time-domain resource unit with the duplex type of full duplex, the first time-domain resource unit corresponding to the first frequency-domain resource unit and/or the second frequency-domain resource unit.

5. The communication method according to claim 4, **characterized in that**, the receiving first configuration information comprises:

receiving a bitmap, wherein each bit in the bitmap corresponds to a respective time-domain resource unit, and each bit indicates whether the duplex type is full duplex;
or, receiving higher layer signaling, wherein the higher layer signaling includes the position of the first time-domain resource unit.

6. The communication method according to claim 1, **characterized in that**, the first configuration information indicates that the duplex type for the time-domain resource units is full duplex, and the communication method further comprises:
receiving third configuration information, wherein the third configuration information includes a position of a second time-domain resource unit with the duplex type of uplink and/or a position of a third time-domain resource unit with the duplex type of downlink.

7. The communication method according to claim 6, **characterized in that**, the receiving third configuration information comprises:
receiving a bitmap, wherein each bit in the bitmap corresponds to a respective time-domain resource unit, and a value of the bit being a target value indicates the duplex type of uplink or the duplex type of downlink.

8. The communication method according to claim 1, **characterized in that**, the communication method further comprises:
receiving fourth configuration information, wherein the fourth configuration information indicates the duplex type of frequency-domain resource units.

9. The communication method according to claim 8, **characterized in that**, the fourth configuration information includes a common configuration applicable to multiple frequency-domain resource units and a dedicated configuration for a target frequency-domain resource unit.

10. The communication method according to claim 9, **characterized in that**, the receiving fourth configuration information comprises:

receiving cell-specific higher layer signaling, wherein the cell-specific higher layer signaling includes the common configuration;
receiving device-specific higher layer signaling, wherein the device-specific higher layer signaling includes the dedicated configuration.

11. The communication method according to claim 8, **characterized in that**, the fourth configuration information includes a first set of frequency-domain resource units with the duplex type of uplink, and a second set of frequency-domain resource units with the duplex type of downlink.

12. The communication method according to claim 11, **characterized in that**, the duplex type of a frequency-domain resource unit overlapping between the first set of frequency-domain resource units and the second set of frequency-domain resource units is full duplex.

13. The communication method according to claim 8, **characterized in that**, the fourth configuration information indicates that the duplex type for a first frequency-domain resource unit is full duplex, and the communication method further comprises:

receiving a third configuration, wherein the third configuration indicates whether the duplex type for the first frequency-domain resource unit is time division duplex or in-band full duplex;
or, based on the first frequency-domain resource unit being configured with time division duplex in a time domain, determining that the duplex type for the first frequency-domain resource unit is time division duplex; otherwise, determining that the duplex type for the first frequency-domain resource unit is in-band full duplex.

14. The communication method according to any one of claims 8 to 13, **characterized in that**, the frequency-domain resource unit is selected from a subband, a resource block RB, and a resource element RE.

15. A communication method, **characterized in that**, the communication method comprises:

sending first configuration information, wherein the first configuration information indicates a duplex type for time-domain resource units, the duplex type including full duplex; performing uplink transmission, downlink transmission, and/or simultaneous uplink and downlink transmissions according to the first configuration information.

16. A communication apparatus, **characterized in that**, the communication apparatus comprises:

a communication module configured to receive first configuration information, wherein the first configuration information indicates a duplex type for time-domain resource units, the duplex type including full duplex; the communication module is further configured to perform uplink transmission, downlink transmission, and/or simultaneous uplink and downlink transmissions according to the first configuration information.

17. A communication apparatus, **characterized in that**, the communication apparatus comprises:

a communication module configured to send first configuration information, wherein the first configuration information indicates a duplex type for time-domain resource units, the duplex type including full duplex; the communication module is further configured to perform uplink transmission, downlink transmission, and/or simultaneous uplink and downlink transmissions according to the first configuration information.

18. A computer-readable storage medium having computer programs stored thereon, **characterized in that**, the computer programs, when executed by a processor, cause the steps of the communication method according to any one of claims 1 to 15 to be performed.

19. A communication apparatus, comprising a memory and a processor, wherein the memory stores computer programs executable on the processor, **characterized in that**, the computer programs, when executed by the processor, cause steps of the communication method according to any one of claims 1 to 14 to be performed.

20. A communication apparatus, comprising a memory and a processor, wherein the memory stores computer programs executable on the processor, **characterized in that**, the computer programs, when executed by the processor, cause steps of the communication method according to claim 15 to be performed.

Terminal Device

Network Device

step 101

First configuration information

Uplink transmission,
download transmission and/or
simultaneous uplink and downlink
transmissions

step 102

FIG. 1

Slots 0-3          Slots 4-6      Slots 7-8          Slots 9-13

| a | D | X | D+U | U |

| b | D | X | U | D+U |

| c | D | D+U | X | U |

# FIG. 2

| d | D | D+U | X | U |

| e | D+U | D | X | U |

| f | D | X | U | D+U |

# FIG. 3

FIG. 4

FIG. 5

step 101 —— First configuration information

step 601 —— Fourth configuration information

step 102 —— Uplink transmission, download transmission and/or simultaneous uplink and downlink transmissions

Terminal Device

Network Device

FIG. 6

Subframe 0    Subframe 2            Subframe n            Subframe m

D    D    D            D+U    D+U            U    U    U

## FIG. 7

a1

| U | U | U |  | U | U | U |  | U | U | U |  | U | U | U |
| U |  | U | U | U |  | U | U | U |  | U | U | U |  | U | U |
|  | U | U |  |  | U | U |  |  | U | U |  |  | U | U |  |
| U |  | U | U | U |  | U | U | U |  | U | U | U |  | U | U |

a2

|  |  | D |  |  |  | D |  |  |  | D |  |  |  | D |  |
| D | D | D |  | D | D | D |  | D | D | D |  | D | D | D |
| D |  | D |  | D |  | D |  | D |  | D |  | D |  | D |  |
|  | D | D |  |  | D | D |  |  | D | D |  |  | D | D |  |

a3

| U | U | DU | F | U | U | DU | F | U | U | DU | F | U | U | DU | F |
| DU | D | DU | U | DU | D | DU | U | DU | D | DU | U | DU | D | DU | U |
| D | U | DU | F | D | U | DU | F | D | U | DU | F | D | U | DU | F |
| U | D | DU | U | U | D | DU | U | U | D | DU | U | U | D | DU | U |

## FIG. 8

90

Communication
Module                901

FIG. 9

Processor           1001

Memory    1002        Transceiver    1003

FIG. 10

## INTERNATIONAL SEARCH REPORT

| International application No. |
|---|
| **PCT/CN2024/114093** |

| A. | CLASSIFICATION OF SUBJECT MATTER |
|---|---|

H04W72/23(2023.01)i;  H04W72/04(2023.01)i

According to International Patent Classification (IPC) or to both national classification and IPC

| B. | FIELDS SEARCHED |
|---|---|

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

3GPP; VEN; CNABS; CNTXT; USTXT; EPTXT; WOTXT; CNKI: 发送, 接收, 配置, 非连续, 频谱, 全双工, 指示, 类型, 上行, 下行, 同时, 上下行, 灵活, 比特图, sen+, receiv+, configur+, spectrum, non-continuous, indicat+, type, uplink, downlink, simultaneously, flexible, bit, map

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 116488781 A (HUAWEI TECHNOLOGIES CO., LTD.) 25 July 2023 (2023-07-25) description, paragraphs [0110]-[0272] | 1-20 |
| Y | WO 2023004653 A1 (BEIJING XIAOMI MOBILE SOFTWARE CO., LTD.) 02 February 2023 (2023-02-02) description, page 5, 5th-to-last line to page 13, last line | 1-20 |
| A | CN 116321487 A (CHINA TELECOM CORP., LTD.) 23 June 2023 (2023-06-23) entire document | 1-20 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 November 2024** | **19 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/114093**

| Patent document cited in search report | | | Publication date (day/month/year) | Patent family member(s) | Publication date (day/month/year) |
|---|---|---|---|---|---|
| CN | 116488781 | A | 25 July 2023 | None | |
| WO | 2023004653 | A1 | 02 February 2023 | None | |
| CN | 116321487 | A | 23 June 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311101935